# EUROPEAN PATENT SPECIFICATION

(11) **EP 4 054 051 B1**
(45) Date of publication and mention of the grant of the patent: **27.11.2024**
(21) Application number: 22160346.7
(22) Date of filing: 04.03.2022
(51) Int. Cl.: H02J 7/00

(54) **ENERGY STORAGE SYSTEM AND BATTERY MANAGEMENT METHOD**
ENERGIESPEICHERSYSTEM UND BATTERIEVERWALTUNGSVERFAHREN
SYSTÈME DE STOCKAGE D'ÉNERGIE ET PROCÉDÉ DE GESTION DE BATTERIE

(30) Priority: 04.03.2021 CN 202110239117
(43) Date of publication of application: 07.09.2022
(73) Proprietor: Huawei Digital Power Technologies Co., Ltd., Shenzhen, Guangdong 518043 (CN)
(72) Inventor: JU, Hualei, Shenzhen, 518129, P.R. (CN); LI, Lin, Shenzhen, 518129, P.R. (CN); GUO, Haibin, Shenzhen, 518129, P.R. (CN)
(74) Representative: Gill Jennings & Every LLP

(56) References cited:
- JP-B2- 5 474 934
- KR-B1- 101 587 333
- US-B2- 9 885 759

## Description

### TECHNICAL FIELD

This application relates to the field of battery energy storage technologies, and in particular, to an energy storage system and a battery management method.

### BACKGROUND

An energy storage system generally has a plurality of battery clusters. One battery cluster may be obtained by connecting a plurality of battery packs in series, and the energy storage system may supply power to a load by using a plurality of battery clusters connected in parallel. Due to different attenuation velocities of components in the energy storage system or mixing of new and used batteries, there may be a relatively large difference between states of charge (state of charge, SOC) (which may also be referred to as remaining power) of battery packs in the energy storage system, and consequently, performance of the energy storage system is affected. Therefore, when the new and used batteries are mixed, after charging/discharging of some battery packs ends, a battery for which charging/discharging has not ended may continue to be charged/discharged. In this case, a current equalization circuit (a bidirectional direct current (direct current, DC)/DC converter is usually used in the current equalization circuit) needs to be added, so that the energy storage system operates in an equalized current equalization mode in which a target is to equalize states of charge of the battery packs. Generally, a battery management system in the energy storage system may use an SOC change rate of each battery cluster as a determining criterion to determine whether the energy storage system needs to perform current equalization adjustment. When the energy storage system needs to perform current equalization adjustment (in other words, an SOC difference between battery packs is relatively large), DC/DC converters connected in parallel to the battery packs operate in the equalized current equalization mode to equalize SOCs of the battery packs. However, when the battery packs have different specifications, an operating mode of the DC/DC converter cannot be accurately switched based on the SOC change rate, and consequently, the SOCs of the battery packs cannot be equalized, and applicability is poor.

KR 101 587 333 B1 discloses a battery energy storage device comprising battery cells of a predetermined number serially connected, multiple battery packs serially connected, and a bidirectional PWM inverter which comprises a direct current side input-output terminal connected to the multiple battery packs and an alternating current side input-output terminal.

### SUMMARY

This application provides an energy storage system and a battery management method, to equalize battery parameters of battery packs or enable a battery cluster to output target power, so that system stability is improved, and applicability is good.

According to a first aspect, this application provides an energy storage system in accordance with appended claim 1. In this application, when the battery packs in the battery cluster have different specifications, the battery parameters of the battery packs can be equalized, or the battery cluster is enabled to output the target power, so that system stability is improved, and applicability is better.

In the energy storage system provided in this application, diversity of the operating mode of the first power conversion module can be implemented, accuracy of operating mode switching is improved, and applicability is better.

In the energy storage system provided in this application, the state of charge offset value and/or the current instruction value of the second power conversion module are determined as the system control parameter, and therefore, whether to switch an operating mode of each first power conversion module to the target mode may be accurately determined by using the system control parameter, and applicability is better.

With reference to the first aspect, when the system control parameter includes the state of charge offset value and the current instruction value of the second power conversion module, the battery control system may be configured to: when the state of charge offset value is less than or equal to a preset state of charge threshold, and the current instruction value of the second power conversion module is greater than a current limiting value of the second power conversion module, determine that the system control parameter reaches the parameter threshold, and control each first power conversion module to switch the operating mode of the first power conversion module to the target-power current equalization mode. In the energy storage system provided in this application, when the state of charge offset value is less than or equal to the preset state of charge threshold, and the current instruction value is greater than the current limiting value, each first power conversion module may be controlled to switch the operating mode of the first power conversion module to the target-power current equalization mode, so that accuracy of mode switching is improved, and applicability is better.

With reference to the first aspect, when the system control parameter is the current instruction value of the second power conversion module, the battery control system may be configured to: when the current instruction value of the second power conversion module is greater than a current limiting value of the second power conversion module, determine that the system control parameter reaches the parameter threshold, and control each first power conversion module to switch the operating mode of the first power conversion module to the target-power current equalization mode. In the energy storage system provided in this application, when the current instruction value is greater than the current limiting value, each first power conversion module may be controlled to switch the operating mode of the first power conversion module to the target-power current equalization mode, so that accuracy of mode switching is improved, and applicability is better.

With reference to the first aspect, when the system control parameter includes the state of charge offset value and the current instruction value of the second power conversion module, the battery control system may be configured to: when the current instruction value of the second power conversion module is less than or equal to a current limiting value of the second power conversion module, and the state of charge offset value is greater than a preset state of charge threshold, determine that the system control parameter reaches the parameter threshold, and control each first power conversion module to switch the operating mode of the first power conversion module to the equalized current equalization mode. In the energy storage system provided in this application, when the current instruction value is less than or equal to the current limiting value, and the state of charge offset value is greater than the preset state of charge threshold, each first power conversion module may be controlled to switch the operating mode of the first power conversion module to the equalized current equalization mode, so that accuracy of mode switching is improved, and applicability is better.

With reference to the first aspect, in a first possible implementation, the battery control system is further configured to determine the current limiting value of the second power conversion module based on the battery parameter of each battery pack. The battery parameter herein may include temperature, a maximum operating current, a state of charge value, a state of health (state of health, SOH) value, and another parameter. In other words, the battery control system is further configured to determine the current limiting value of the second power conversion module based on temperature, a maximum operating current, a state of charge value, a state of health value, and another parameter that are of each battery pack. In the energy storage system provided in this application, the current limiting value of the second power conversion module may be determined based on the battery parameter of each battery pack, and it may be further determined whether to switch each first power conversion module to the target mode, so that applicability is better.

With reference to the first aspect or the first possible implementation of the first aspect, in an second possible implementation, one battery pack may be connected in parallel to the bus through one first power conversion module. In other words, one battery pack is connected in parallel to one end of a first power conversion module, and the other end of the first power conversion module is connected in parallel to the bus. When the target mode is the target-power current equalization mode, the battery parameter may include the maximum operating current. The battery control system may be configured to: receive a power current value delivered by the system controller based on expected power, and deliver the power current value to the first power conversion module connected in parallel to each battery pack, where the power current value is a current value that needs to be provided by the second power conversion module to the load or the power grid in the target-power current equalization mode. Magnitude of the expected power herein may be determined by a requirement of the load. Any first power conversion module connected in parallel to any one of the battery packs may be configured to obtain a current in a maximum operating current of the battery pack except a power current and output the current to the bus, or configured to obtain a current from the bus based on the power current value and output the current to the second power conversion module in parallel with the battery pack, to enable the battery cluster to output the target power to the second power conversion module. A current value of the power current is equal to the power current value. Herein, a current output in parallel by any battery pack and any first power conversion module connected in parallel to the battery pack is less than or equal to the power current. When the current output in parallel by the battery pack and the first power conversion module is less than the power current, the target power is less than the expected power. When the current output in parallel by the battery pack and the first power conversion module is equal to the power current, the target power is equal to the expected power. In the energy storage system provided in this application, to meet a power requirement of the load may be used as a primary objective, and all battery packs may be controlled to perform power conversion to a maximum capability, so that actual output power of the battery cluster is the largest, and therefore, system stability is improved, and applicability is better.

With reference to the first aspect or the first possible implementation of the first aspect, in a third possible implementation, one battery pack is connected in parallel to the bus through one first power conversion module, the target mode is the equalized current equalization mode, and the battery parameter includes the state of charge value. The battery control system is configured to: when the state of charge value of the battery pack is greater than an average state of charge value, control the battery pack to discharge to the bus through the first power conversion module connected in parallel to the battery pack, or configured to: when the state of charge value of the battery pack is less than the average state of charge value, control the first power conversion module connected in parallel to the battery pack to charge the battery pack. The average state of charge value is an average value of state of charge values of the battery packs. In the energy storage system provided in this application, whether to charge or discharge the battery pack may be accurately determined by using the state of charge value of the battery pack and the average state of charge value.

With reference to the third possible implementation of the first aspect, in an fourth possible implementation, the battery parameter further includes the maximum operating current, and the battery control system may be configured to: receive an equalized current value from the system controller, and deliver the equalized current value to the first power conversion module connected in parallel to each battery pack, where the equalized current value is a current value that needs to be provided by the second power conversion module to the load or the power grid in the equalized current equalization mode. Any first power conversion module connected in parallel to any one of the battery packs is configured to obtain a current in a maximum operating current of the battery pack except an equalized current and output the current to the bus, or configured to obtain a current from the bus to output an equalized current to the second power conversion module and charge the battery pack, to equalize the battery parameters of the battery packs. A current value of the equalized current is equal to the equalized current value, and the battery parameter of each battery pack may include a state of charge value, a state of health value, or another parameter. In the energy storage system provided in this application, any battery pack may be charged or discharged, to equalize the battery parameters of the battery packs, so that applicability is better.

With reference to any one of the first aspect to the fourth possible implementation of the first aspect, in a fifth possible implementation, the plurality of battery packs are connected to a same first power conversion module through a selection switch, and the selection switch may be configured to select a target battery pack from the plurality of battery packs, so that the target battery pack is connected in parallel to the bus through the same first power conversion module. The target battery pack is a battery pack with a maximum battery parameter or a battery pack with a minimum battery parameter in the plurality of battery packs, and the battery parameter includes the state of charge value or the maximum operating current. In the energy storage system provided in this application, the battery parameters of the battery packs can be partially equalized or the battery cluster can be enabled to output the target power through a small quantity of first power conversion modules, so that costs are reduced.

According to a second aspect, this application provides a battery management method in accordance with appended claim 7.

In the method provided in this application, diversity of the operating mode of the first power conversion module can be implemented, accuracy of operating mode switching is improved, and applicability is better.

In the method provided in this application, the state of charge offset value and/or the current instruction value of the second power conversion module are determined as the system control parameter, and therefore, whether to switch an operating mode of each first power conversion module to the target mode may be accurately determined by using the system control parameter, and applicability is better.

With reference to the second aspect, when the system control parameter is the current instruction value of the second power conversion module, and when the current instruction value of the second power conversion module is greater than a current limiting value of the second power conversion module, the battery control system determines that the system control parameter reaches the parameter threshold, and controls each first power conversion module to switch the operating mode of the first power conversion module to a target-power current equalization mode. In the method provided in this application, when the state of charge offset value is less than or equal to the preset state of charge threshold, and the current instruction value is greater than the current limiting value, each first power conversion module may be controlled to switch the operating mode of the first power conversion module to the target-power current equalization mode, so that accuracy of mode switching is improved, and applicability is better.

With reference to the second aspect, when the system control parameter includes the state of charge offset value and the current instruction value of the second power conversion module, and when the state of charge offset value is less than or equal to a preset state of charge threshold, and the current instruction value of the second power conversion module is greater than a current limiting value of the second power conversion module, the battery control system determines that the system control parameter reaches the parameter threshold, and controls each first power conversion module to switch the operating mode of the first power conversion module to a target-power current equalization mode. Otherwise, when the current instruction value of the second power conversion module is less than or equal to the current limiting value of the second power conversion module, and the state of charge offset value is greater than the preset state of charge threshold, the battery control system determines that the system control parameter reaches the parameter threshold, and controls each first power conversion module to switch the operating mode of the first power conversion module to an equalized current equalization mode. In the method provided in this application, whether to switch the operating mode of each first power conversion module to the equalized current equalization mode or the target-power current equalization mode may be determined by using the state of charge offset value and the current instruction value, so that accuracy of mode switching is improved, and applicability is better.

With reference to the second aspect, in a first possible implementation, one battery pack is connected in parallel to the bus through one first power conversion module, the target mode is the target-power current equalization mode, the target current value is a power current value that needs to be provided by the second power conversion module to the load or the power grid in the target-power current equalization mode, the power current value is determined based on expected power, and the battery parameter includes a maximum operating current. The battery control system may control any first power conversion module connected in parallel to any one of the battery packs to obtain a current in a maximum operating current of the battery pack except a power current and output the current to the bus, or control any first power conversion module to obtain a current from the bus based on the power current value and output the current to the second power conversion module in parallel with the battery pack, to enable the battery cluster to output the target power to the second power conversion module. A current value of the power current is equal to the power current value, and the target power is less than or equal to the expected power. In the method provided in this application, to meet a power requirement of the load may be used as a primary objective, and all battery packs may be controlled to perform power conversion to a maximum capability, so that actual output power of the battery cluster is the largest, and therefore, system stability is improved, and applicability is better.

With reference to the second aspect, in a second possible implementation, one battery pack is connected in parallel to the bus through one first power conversion module, the target mode is the equalized current equalization mode, the target current value is an equalized current value that needs to be provided by the second power conversion module to the load or the power grid in the equalized current equalization mode, and the battery parameter includes a maximum operating current. The battery control system may control any first power conversion module connected in parallel to any one of the battery packs to obtain a current in a maximum operating current of the battery pack except an equalized current and output the current to the bus, or control any first power conversion module to obtain a current from the bus to output an equalized current to the second power conversion module and charge the battery pack, to equalize the battery parameters of the battery packs. A current value of the equalized current is equal to the equalized current value. In the method provided in this application, any battery pack may be charged or discharged, to equalize the battery parameters of the battery packs, so that applicability is better.

Optionally, when the target mode is the equalized current equalization mode, the battery parameter further includes a state of charge value, and the state of charge value may be used to determine to charge the battery pack or control the battery pack to perform discharging. When the state of charge value of the battery pack is greater than an average state of charge value, the battery control system may control the battery pack to discharge to the bus through the first power conversion module connected in parallel to the battery pack, or when the state of charge value of the battery pack is less than the average state of charge value, the battery control system may control the first power conversion module connected in parallel to the battery pack to charge the battery pack.

In this application, whether to switch the operating mode of each first power conversion module to the target mode may be determined by using the system control parameter, so that the battery parameters of the battery packs are equalized or the battery cluster is enabled to output the target power. Therefore, diversity of the operating mode of the first power conversion module can be implemented, accuracy of operating mode switching and system stability are improved, and applicability is better.

### BRIEF DESCRIPTION OF DRAWINGS

FIG. 1 is a schematic diagram of an application scenario of an energy storage system according to this application;
FIG. 2 is a schematic diagram of a structure of an energy storage system according to this application;
FIG. 3A and FIG. 3B are another schematic diagram of a structure of an energy storage system according to this application;
FIG. 4 is still another schematic diagram of a structure of an energy storage system according to this application; and
FIG. 5 is a schematic flowchart of a battery management method according to this application.

### DESCRIPTION OF EMBODIMENTS

An energy storage system provided in this application is applicable to a plurality of types of power generation devices such as a photovoltaic power generation device or a wind power generation device and different types of power consumption devices (for example, a power grid, a household device, and an industrial and commercial power consumption device), and may be applied to the field of automobiles, the field of microgrid, or another field. The energy storage system provided in this application is applicable to energy storage of different types of batteries. Herein, the different types of batteries may include a lithium-ion battery, a lead-acid battery (or referred to as a lead-acid storage battery), or another battery. A specific type of the battery is not specifically limited in this application.

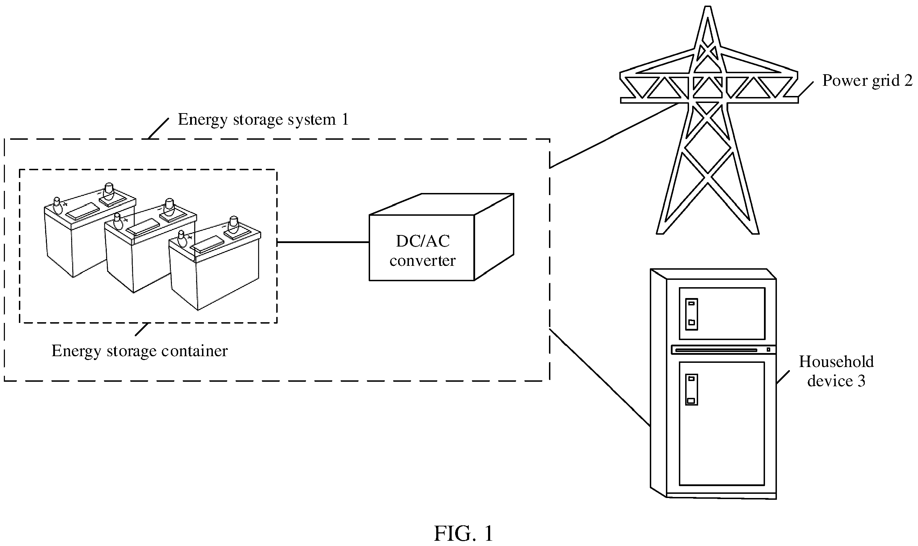

The energy storage system provided in this application may adapt to different application scenarios, for example, a photovoltaic power generation scenario, a wind power generation scenario, or a power supply scenario of a power consumption device. The power supply scenario of the power consumption device is used as an example for description, and details are not described below. FIG. 1 is a schematic diagram of an application scenario of an energy storage system according to this application. The energy storage system provided in this application may include a battery cluster, a battery control system, at least two first power conversion modules, a bus, and a second power conversion module (for example, a DC/DC converter). The battery cluster may include a plurality of battery packs connected in series, the plurality of battery packs may be connected in parallel to the bus through the at least two first power conversion modules, one end of the second power conversion module is connected in parallel to the battery cluster, and the other end of the second power conversion module may be connected to a load or a power grid through an energy storage converter (for example, a DC/AC converter). One battery pack herein may include one or more battery units (a voltage of the battery unit is generally between 2.5 V and 4.2 V) connected in series and in parallel, to form a minimum energy storage and management unit. As shown in FIG. 1, the energy storage system (for example, an energy storage system 1) may include an energy storage container and a DC/AC converter. The energy storage container herein may include at least one battery cluster (that is, one or more battery clusters) and a DC/DC converter. When the energy storage container includes a plurality of battery clusters, the battery clusters are connected in parallel and then connected in parallel to the DC/DC converter. When the energy storage container includes one battery cluster, the battery cluster is connected in parallel to the DC/DC converter. The battery cluster in the energy storage container may supply a direct-current input voltage to the DC/DC converter. The DC/DC converter converts power of the direct-current input voltage and outputs direct-current electric energy to the DC/AC converter. In this case, the DC/AC converter can convert power of the direct-current electric energy input by the DC/DC converter and output alternating-current electric energy to an alternating-current power grid (for example, a power grid 2) or an alternating-current load (for example, a household device 3), to supply power to the power grid 2 and the household device 3.

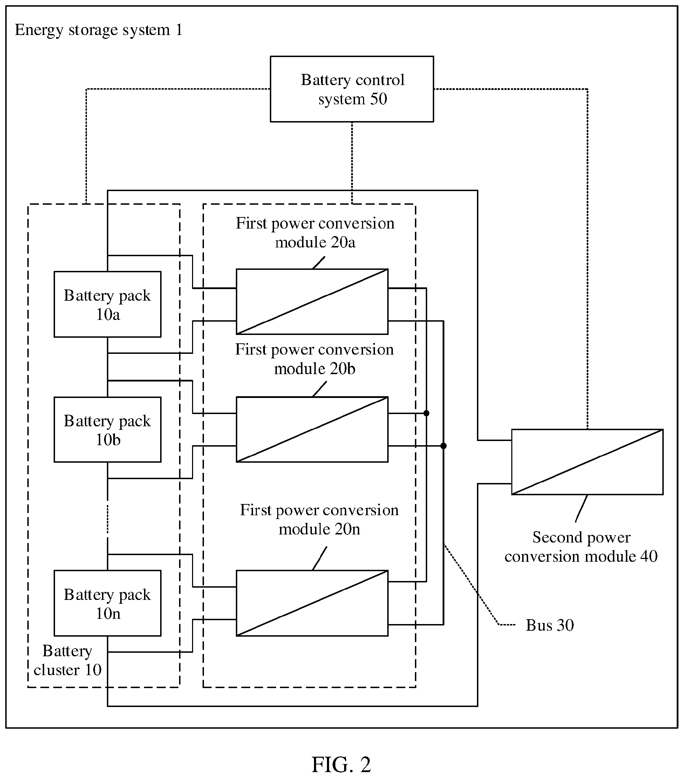

In some feasible implementations, the battery control system in the energy storage system may obtain a target current value that needs to be provided by the second power conversion module to the load or the power grid. Based on the target current value and a battery parameter of each battery pack, the battery control system may control the battery pack to discharge to the bus through the first power conversion module connected in parallel to the battery pack, or control the first power conversion module connected in parallel to the battery pack to charge the battery pack, to equalize the battery parameters of the battery packs or enable the battery cluster to output target power. The energy storage system provided in this application can equalize the battery parameters of the battery packs or enable the battery cluster to output the target power, so that system stability is improved, and applicability is better. The following describes, with reference to FIG. 2 to FIG. 4, the energy storage system provided in this application and a working principle of the energy storage system by using an example.

FIG. 2 is a schematic diagram of a structure of an energy storage system according to this application. As shown in FIG. 2, an energy storage system 1 may include a battery cluster 10, at least two first power conversion modules (for example, a first power conversion module 20a to a first power conversion module 20n), a bus 30, a second power conversion module 40, and a battery control system 50. A plurality of battery packs in the battery cluster 10 may be connected in parallel to the bus 30 through the at least two first power conversion modules. For example, one battery pack in the battery cluster 10 is connected in parallel to the bus 30 through one first power conversion module, or the plurality of battery packs in the battery cluster 10 are connected in parallel to the bus 30 through one first power conversion module. For ease of description, the first power conversion module 20a to the first power conversion module 20n are used as an example below for description. Details are not described below. The battery cluster 10 may include a plurality of battery packs (for example, a battery pack 10a to a battery pack 10n). The battery pack 10a is connected in parallel to the bus 30 through the first power conversion module 20a; the battery pack 10b is connected in parallel to the bus 30 through the first power conversion module 20b; ...; and the battery pack 10n is connected in parallel to the bus 30 through the first power conversion module 20n. In other words, each battery pack is connected in parallel to one end of a first power conversion module, and the other end of each first power conversion module is connected in parallel to the bus 30. For example, the battery pack 10a is connected in parallel to one end of the first power conversion module 20a; the battery pack 10b is connected in parallel to one end of the first power conversion module 20b; ...; and the battery pack 10n is connected in parallel to one end of the first power conversion module 20n. The other ends of the first power conversion module 20a to the first power conversion module 20n are connected in parallel to the bus 30. In this application, one or more power converters connected in parallel to the battery pack may be collectively referred to as the first power conversion module. The battery control system 50 may perform power line carrier (power line carrier, PLC) communication with the battery cluster 10, the first power conversion module 20a to the first power conversion module 20n, and the second power conversion module 40 through a power line.

In some feasible implementations, when the energy storage system includes a plurality of battery clusters, one battery cluster may be connected in parallel to one second power conversion module, or the plurality of battery clusters are connected in parallel to a same second power conversion module. Therefore, the second power conversion module herein may also be referred to as a cluster-level power conversion module or a cluster-level power converter. This may be specifically determined based on an actual application scenario, and is not limited herein. In this application, a power conversion module connected in parallel to the entire battery cluster may be referred to as the second power conversion module, and the second power conversion module may be a cluster-level DC/DC conversion module (which may also be referred to as a cluster-level DC/DC converter). For ease of description, that the energy storage system includes one battery cluster is used as an example below for description. As shown in FIG. 2, the energy storage system 1 includes one battery cluster (that is, the battery cluster 10) and one second power conversion module (that is, the second power conversion module 40). One end of the second power conversion module 40 is connected in parallel to the battery cluster 10, and the other end of the second power conversion module 40 may be connected to a load or a power grid.

In some feasible implementations, the battery control system 50 may obtain a target current value that needs to be provided by the second power conversion module 40 to the load or the power grid. Further, the battery control system 50 may control, based on the target current value and a maximum operating current of each battery pack in the battery pack 10a to the battery pack 10n, the battery pack to discharge to the bus 30 through a first power conversion module connected in parallel to the battery pack or a first power conversion module connected in parallel to the battery pack to charge the battery pack, to equalize battery parameters of the battery packs in the battery pack 10a to the battery pack 10n or enable the battery cluster 10 to output target power. In this application, a current value that needs to be provided by the second power conversion module 40 to the load or the power grid in a target mode (for example, a target-power current sharing mode or an equalized current equalization mode) may be collectively referred to as the target current value (for example, the following power current value or equalized current value).

In some feasible implementations, the system controller may deliver, to the battery control system 50, an instruction that carries the current instruction value of the second power conversion module 40. In this case, the battery control system 50 may receive the current instruction value of the second power conversion module 40 that is delivered by the system controller, detect a battery parameter of each battery pack in the battery pack 10a to the battery pack 10n, and determine the system control parameter based on the battery parameter of each battery pack in the battery pack 10a to the battery pack 10n and/or the current instruction value of the second power conversion module 40. In this application, a parameter used to determine whether to switch an operating mode of each first power conversion module may be collectively referred to as the system control parameter. When the system control parameter reaches a parameter threshold, the battery control system 50 may control each first power conversion module in the first power conversion module 20a to the first power conversion module 20n to switch an operating mode of the first power conversion module to a target mode, and obtain a target current value that needs to be provided by the second power conversion module 40 to the load or the power grid in the target mode. The parameter threshold may be a preset threshold configured by the energy storage system and/or a threshold calculated by using the battery parameter of each battery pack, and may be specifically determined based on an actual application scenario. This is not limited herein.

In some feasible implementations, when the battery parameter includes a state of charge value, the battery control system 50 may determine a state of charge value of each battery pack in the battery pack 10a to the battery pack 10n based on a current integral of each battery pack in the battery pack 10a to the battery pack 10n or a volt-ampere characteristic curve (that is, a UI characteristic curve) of each battery pack. The battery control system 50 may determine a state of charge offset value based on a maximum state of charge value and a minimum state of charge value in state of charge values of the battery packs in the battery pack 10a to the battery pack 10n, and determine the state of charge offset value and/or the current instruction value of the second power conversion module 40 as the system control parameter. The state of charge offset value herein may be a difference between the maximum state of charge value and the minimum state of charge value. It may be understood that the system control parameter may be the state of charge offset value; the system control parameter may be the current instruction value of the second power conversion module 40; or the system control parameter may be the state of charge offset value and the current instruction value of the second power conversion module 40. Specifically, the system control parameter may be determined based on an actual application scenario, and is not limited herein.

In some feasible implementations, when the energy storage system 1 takes protection of the battery pack in the battery cluster 10 as a primary objective, the system control parameter may be the state of charge offset value. When the state of charge offset value is greater than a preset state of charge threshold, the battery control system 50 may determine that the system control parameter reaches the parameter threshold, and control each first power conversion module in the first power conversion module 20a to the first power conversion module 20n to switch the operating mode of the first power conversion module to an equalized current equalization mode. Optionally, when the state of charge offset value is less than or equal to the preset state of charge threshold, the system control parameter may include the state of charge offset value and the current instruction value of the second power conversion module 40. The battery control system 50 may determine a current limiting value of the second power conversion module 40 based on the battery parameter of each battery pack in the battery pack 10a to the battery pack 10n. The battery parameter herein may include temperature, a maximum operating current, a state of charge value, a state of health value, and another parameter. In other words, the battery control system 50 may determine the current limiting value of the second power conversion module 40 based on temperature, a maximum operating current, a state of charge value, and a state of health value that are of each battery pack in the battery pack 10a to the battery pack 10n. The maximum operating current of the battery pack herein may be determined by a maximum charging operating current/a maximum discharging operating current configured during delivery of the battery pack and the temperature of the battery pack. For example, a maximum operating current of the battery pack decreases as the temperature increases. In other words, when factory configuration of the battery pack is determined and the temperature of the battery pack is determined, the maximum operating current (including the maximum charging operating current and/or the maximum discharging operating current) of the battery pack is determined. When the state of charge offset value is less than or equal to the preset state of charge threshold, and the current instruction value of the second power conversion module 40 is greater than the current limiting value of the second power conversion module 40, the battery control system 50 may determine that the system control parameter reaches the parameter threshold, and control each first power conversion module in the first power conversion module 20a to the first power conversion module 20n to switch the operating mode of the first power conversion module to a target-power current equalization mode.

In some feasible implementations, when the energy storage system 1 takes meeting of a power requirement of the load or the power grid as a primary objective, the system control parameter may be the current instruction value of the second power conversion module 40. When the current instruction value of the second power conversion module 40 is greater than the current limiting value of the second power conversion module 40, the battery control system 50 may determine that the system control parameter reaches the parameter threshold, and control each first power conversion module in the first power conversion module 20a to the first power conversion module 20n to switch the operating mode of the first power conversion module to a target-power current equalization mode. In the target-power current equalization mode, the battery cluster 10 performs power conversion to a maximum capability; in other words, the battery cluster 10 outputs, to the load or the power grid, maximum power that can be provided by the battery cluster 10, and target power finally output by the battery cluster 10 is less than or equal to maximum power required by the load or the power grid. Therefore, the target-power current equalization mode may also be referred to as a maximum-power current equalization mode. Optionally, when the current instruction value of the second power conversion module 40 is less than or equal to the current limiting value of the second power conversion module 40, the system control parameter may include the state of charge offset value and the current instruction value of the second power conversion module 40. When the current instruction value of the second power conversion module 40 is less than or equal to the current limiting value of the second power conversion module 40, and the state of charge offset value is greater than the preset state of charge threshold, the battery control system 50 may determine that the system control parameter reaches the parameter threshold, and control each first power conversion module in the first power conversion module 20a to the first power conversion module 20n to switch the operating mode of the first power conversion module to an equalized current equalization mode.

In some feasible implementations, when the target mode is the target-power current equalization mode, the system controller may determine expected power of the load or the power grid, and deliver a power current value to the battery control system 50 based on the expected power. Magnitude of the expected power may be determined by a power requirement of the load. The expected power herein may also be understood as maximum power required by the load or the power grid. The power current value herein is a current value that needs to be provided by the second power conversion module 40 to the load or the power grid in the target-power current equalization mode. In this case, the battery control system 50 may receive the power current value from the system controller, and deliver the power current value to the first power conversion module connected in parallel to each battery pack in the battery cluster 10. For ease of description, that the battery cluster 10 includes the battery pack 10a and the battery pack 10b is used as an example below for description. The battery parameter herein may include the maximum operating current. When a maximum operating current of the battery pack 10a is greater than a maximum operating current of the battery pack 10b, the battery pack 10a may output a power current to the second power conversion module 40, and output, to the first power conversion module 20a, a current in the maximum operating current of the battery pack 10a except the power current. The first power conversion module 20a may obtain the current in the maximum operating current of the battery pack 10a except the power current, and output the current to the bus 30. In this case, the first power conversion module 20b may obtain a current from the bus 30 based on the power current value and output the current to the second power conversion module 40 in parallel with the battery pack 10b, to enable the battery cluster 10 to output the target power to the second power conversion module 40. A current value of the power current is equal to the power current value. Herein, a current output by the battery pack 10b and the first power conversion module 20b connected in parallel may be less than or equal to the power current. When the current output by the battery pack 10b and the first power conversion module 20b connected in parallel is less than the power current, the target power is less than the expected power. When the current output by the battery pack 10b and the first power conversion module 20b connected in parallel is equal to the power current, the target power is equal to the expected power. This may be specifically determined based on an actual application scenario, and is not limited herein. When the target power is equal to the expected power, it may indicate that the battery cluster 10 outputs maximum power to the second power conversion module 40.

In some feasible implementations, when the target mode is the equalized current equalization mode, the battery parameter may include the state of charge value. When the state of charge value of the battery pack is greater than an average state of charge value, the battery control system 50 may control the battery pack to discharge to the bus 30 through the first power conversion module connected in parallel to the battery pack, or when the state of charge value of the battery pack is less than an average state of charge value, the battery control system 50 may control the first power conversion module connected in parallel to the battery pack to charge the battery pack. The average state of charge value herein may be an average value of state of charge values of the battery packs in the battery cluster 10. The system controller may deliver an equalized current value to the battery control system 50, and the equalized current value is a current value that needs to be provided by the second power conversion module 40 to the load or the power grid in the equalized current equalization mode. In this case, the battery control system 50 may receive the equalized current value from the system controller, and deliver the equalized current value to the first power conversion module connected in parallel to each battery pack in the battery cluster 10. For ease of description, that the battery cluster 10 includes the battery pack 10a and the battery pack 10b is used as an example below for description. The battery parameter herein may include the maximum operating current (in other words, the battery parameter includes the state of charge value and the maximum operating current). When a maximum operating current of the battery pack 10a is greater than a maximum operating current of the battery pack 10b, the battery pack 10a may output an equalized current to the second power conversion module 40, and output, to the first power conversion module 20a, a current in the maximum operating current of the battery pack 10a except the equalized current. The first power conversion module 20a may obtain the current in the maximum operating current of the battery pack 10a except the equalized current, and output the current to the bus 30. In this case, the first power conversion module 20b may obtain a current from the bus 30 to output the equalized current to the second power conversion module 40 and charge the battery pack 10b, to equalize battery parameters of the battery pack 10a and the battery pack 10b in the battery cluster 10. A current value of the equalized current is equal to the equalized current value, and the battery parameter of each battery pack may include a state of charge value, a state of health value, or another parameter.

Optionally, in some feasible implementations, the plurality of battery packs may alternatively be connected to a same first power conversion module through a selection switch. The selection switch may select a target battery pack from the plurality of battery packs, so that the target battery pack is connected in parallel to the bus through the same first power conversion module. The target battery pack may be a battery pack with a maximum battery parameter or a battery pack with a minimum battery parameter in the plurality of battery packs, and the battery parameter may include the state of charge value or the maximum operating current. When the selection switch selects the target battery pack in the plurality of battery packs, another battery pack except the target battery pack is removed from the plurality of battery packs. Therefore, the battery control system may partially equalize the battery parameters of the battery packs in the battery cluster or enable the battery cluster to output the target power to the second power conversion module. In this way, the battery parameters of the battery packs can be partially equalized or the battery cluster can be enabled to output the target power through a small quantity of first power conversion modules, so that costs are reduced.

For ease of description, that the battery cluster 10 includes the battery pack 10a, the battery pack 10b, and the battery pack 10n is used as an example below for description. The battery pack 10a and the battery pack 10b are connected to the first power conversion module 20a through the selection switch, and the battery pack 10n is directly connected to the first power conversion module 20n. When the target mode is the equalized current equalization mode, the battery parameter includes the state of charge value. It is assumed that a state of charge value of the battery pack 10n is greater than a state of charge value of the battery pack 10a, and is greater than a state of charge value of the battery pack 10b. When the state of charge value of the battery pack 10a is greater than the state of charge value of the battery pack 10b, the selection switch may choose to be connected to the battery pack 10b and remove the battery pack 10a. In this case, the battery control system 50 may equalize battery parameters of the battery pack 10b and the battery pack 10n in the battery cluster 10. It is assumed that a state of charge value of the battery pack 10n is less than a state of charge value of the battery pack 10a, and is less than a state of charge value of the battery pack 10b. When the state of charge value of the battery pack 10a is greater than the state of charge value of the battery pack 10b, the select switch may choose to be connected to the battery pack 10a and remove the battery pack 10b. In this case, the battery control system 50 may equalize battery parameters of the battery pack 10a and the battery pack 10n in the battery cluster 10. When the target mode is the target-power current equalization mode, the battery parameter includes the maximum operating current. It is assumed that a maximum operating current of the battery pack 10n is greater than a maximum operating current of the battery pack 10a, and is greater than a maximum operating current of the battery pack 10b. When the maximum operating current of the battery pack 10a is greater than the maximum operating current of the battery pack 10b, the selection switch may choose to be connected to the battery pack 10b and remove the battery pack 10a. In this case, the battery control system 50 may enable the battery pack 10b and the battery pack 10n in the battery cluster 10 to output target power to the second power conversion module 40. It is assumed that a maximum operating current of the battery pack 10n is less than a maximum operating current of the battery pack 10a, and is less than a maximum operating current of the battery pack 10b. When the maximum operating current of the battery pack 10a is greater than the maximum operating current of the battery pack 10b, the selection switch may choose to be connected to the battery pack 10a and remove the battery pack 10b. In this case, the battery control system 50 may enable the battery pack 10a and the battery pack 10n in the battery cluster 10 to output target power to the second power conversion module 40.

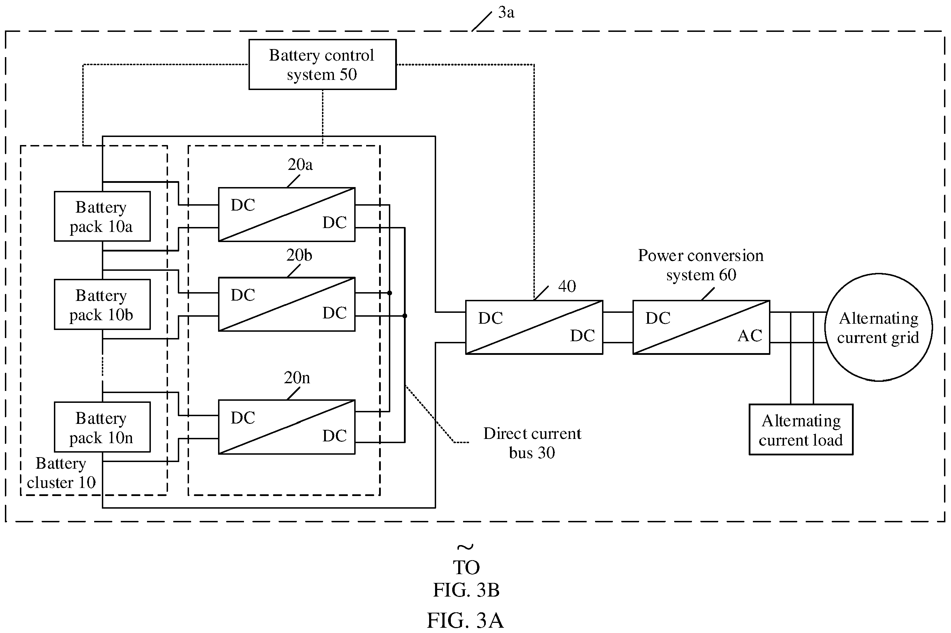

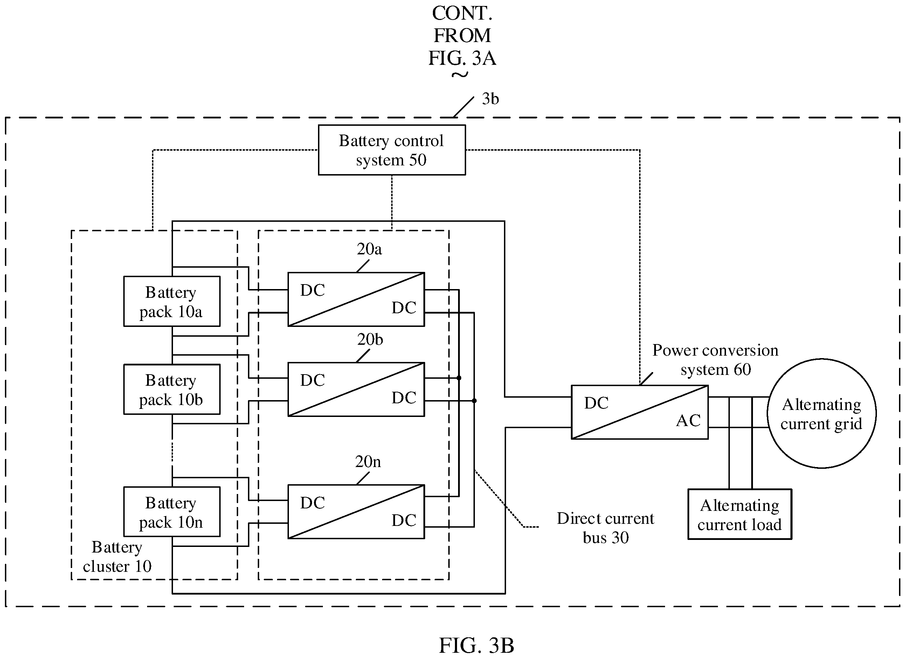

FIG. 3A and FIG. 3B are another schematic diagram of a structure of an energy storage system according to this application. As shown in 3a in FIG. 3A and FIG. 3B, the foregoing energy storage system 1 further includes an energy storage converter 60. One end of the energy storage converter 60 may be connected in parallel to the second power conversion module 40, and the other end of the energy storage converter 60 may be directly connected to the load or the power grid. The first power conversion module 20a to the first power conversion module 20n each are a DC/DC conversion module, the second power conversion module 40 may be a DC/DC conversion module, and the bus 30 is a direct-current bus 30. The energy storage converter 60 herein may be a DC/AC conversion module. Therefore, the load connected to the energy storage converter 60 is an alternating-current load, and the power grid connected to the energy storage converter 60 is an alternating-current power grid. The second power conversion module 40 may convert power of direct-current electric energy provided by the battery cluster 10 to obtain target direct-current electric energy, and output the target direct-current electric energy to the energy storage converter 60. The direct-current electric energy provided by the battery cluster 10 herein may be determined by the power current value corresponding to the target-power current equalization mode or the equalized current value corresponding to the equalized current equalization mode. This indicates that the direct-current electric energy provided by the battery cluster 10 may be determined by final output power of the entire battery cluster 10. The final output power of the entire battery cluster 10 may be target power output by the battery cluster 10 in the target-power current equalization mode or equalized power output by the battery cluster 10 in the equalized current equalization mode. The energy storage converter 60 may convert power of the target direct-current electric energy to obtain alternating-current electric energy, and output the alternating-current electric energy to the alternating-current load or the alternating-current power grid, to supply power to the alternating-current load or the alternating-current power grid to the battery cluster 10.

As shown in 3b in FIG. 3A and FIG. 3B, when the energy storage system 1 does not include the second power conversion module 40, the energy storage system 1 further includes an energy storage converter 60. One end of the energy storage converter 60 may be directly connected in parallel to the battery cluster 10, and the other end of the energy storage converter 60 may be directly connected to the load or the power grid. The energy storage converter 60 herein may be a DC/AC conversion module. Therefore, the load connected to the energy storage converter 60 is an alternating-current load, and the power grid connected to the energy storage converter 60 is an alternating-current power grid. It may be understood that, when the energy storage system 1 does not include the second power conversion module 40, the current limiting value of the second power conversion module 40 in the system control parameter may be a current limiting value of the energy storage converter 60. The energy storage converter 60 may convert power of the direct-current electric energy provided by the battery cluster 10 to obtain alternating-current electric energy, and output the alternating-current electric energy to the alternating-current load or the alternating-current power grid, so that the battery cluster 10 supplies power to the alternating-current load or the alternating-current power grid.

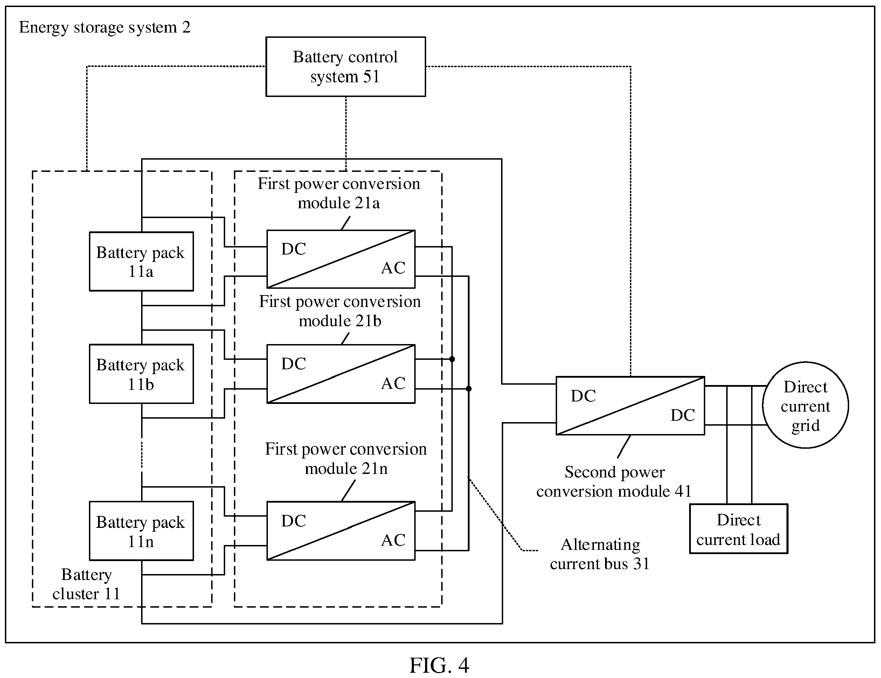

Optionally, in some feasible implementations, when the at least two first power conversion modules in the energy storage system are all DC/AC conversion modules, the plurality of battery packs in the battery cluster may be connected in parallel to the alternating-current bus through the at least two first power conversion modules. FIG. 4 is still another schematic diagram of a structure of an energy storage system according to this application. As shown in FIG. 4, an energy storage system 2 may include a battery cluster 11, at least two first power conversion modules (for example, a first power conversion module 21a to a first power conversion module 21n), an alternating-current bus 31, a second power conversion module 41, and a battery control system 51. The first power conversion module 21a to the first power conversion module 21n each are a DC/AC conversion module, and the second power conversion module 41 is a DC/DC conversion module. The battery cluster 11 herein may be connected in parallel to one end of the second power conversion module 41, and the other end of the second power conversion module 41 may be connected to a direct-current load or a direct-current power grid. The battery control system 51 may perform power line carrier (power line carrier, PLC) communication with the battery cluster 11, the first power conversion module 21a to the first power conversion module 21n, and the second power conversion module 41 through a power line. The battery cluster 11 may include a plurality of battery packs (for example, a battery pack 11a to a battery pack 11n). The battery pack 11a is connected in parallel to the alternating-current bus 31 through the first power conversion module 21a; the battery pack 11b is connected in parallel to the alternating-current bus 31 through the first power conversion module 21b; ...; and the battery pack 11n is connected in parallel to the alternating-current bus 31 through the first power conversion module 21n. In other words, each battery pack is connected in parallel to one end of a first power conversion module, and the other end of each first power conversion module is connected in parallel to the alternating-current bus 31. The second power conversion module 41 may convert alternating-current electric energy provided by the battery cluster 11 into target direct-current electric energy, and output the target direct-current electric energy to a direct-current load or a direct-current power grid, so that the battery cluster 11 supplies power to the direct-current load or the direct-current power grid.

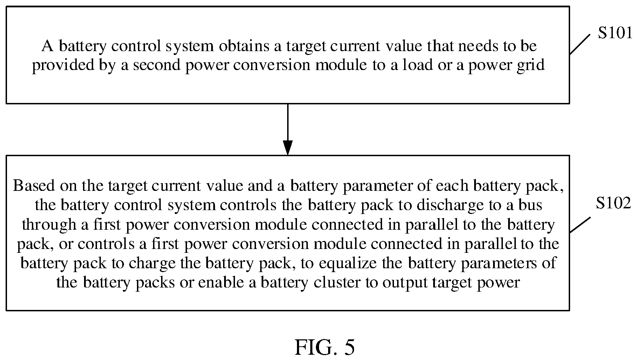

FIG. 5 is a schematic flowchart of a battery management method according to this application. The method is applicable to an energy storage system (for example, the energy storage systems provided in FIG. 2 to FIG. 4). The energy storage system includes a battery cluster, a battery control system, at least two first power conversion modules, a bus, and a second power conversion module. The battery cluster includes a plurality of battery packs connected in series, the plurality of battery packs are connected in parallel to the bus through the at least two first power conversion modules, one end of the second power conversion module is connected in parallel to the battery cluster, and the other end of the second power conversion module is connected to a load or a power grid. As shown in FIG. 5, the method includes the following step S101 and step S102.

Step S101: The battery control system obtains a target current value that needs to be provided by the second power conversion module to the load or the power grid.

In some feasible implementations, the battery control system may receive a current instruction value of the second power conversion module that is delivered by a system controller, detect a battery parameter of each battery pack, and determine a system control parameter based on the battery parameter of each battery pack and/or the current instruction value of the second power conversion module. When the system control parameter reaches a parameter threshold, the battery control system may control each first power conversion module to switch an operating mode of the first power conversion module to a target mode, and obtain a target current value that needs to be provided by the second power conversion module to the load or the power grid in the target mode. The parameter threshold may be a preset threshold configured by the energy storage system and/or a threshold calculated by using the battery parameter of each battery pack, and may be specifically determined based on an actual application scenario. This is not limited herein.

In some feasible implementations, when the battery parameter includes a state of charge value, the battery control system may determine a state of charge offset value based on a maximum state of charge value and a minimum state of charge value in state of charge values of the battery packs, and determine the state of charge offset value and/or the current instruction value of the second power conversion module as the system control parameter. The state of charge offset value herein may be a difference between the maximum state of charge value and the minimum state of charge value. It may be understood that the system control parameter may be the state of charge offset value; the system control parameter may be the current instruction value of the second power conversion module; or the system control parameter may be the state of charge offset value and the current instruction value of the second power conversion module. Specifically, the system control parameter may be determined based on an actual application scenario, and is not limited herein.

In some feasible implementations, when the energy storage system takes protection of the battery pack in the battery cluster as a primary objective, the system control parameter may be the state of charge offset value. When the state of charge offset value is greater than a preset state of charge threshold, the battery control system may determine that the system control parameter reaches the parameter threshold, and control each first power conversion module to switch the operating mode of the first power conversion module to an equalized current equalization mode. Further, the system controller may receive an equalized current value from the system controller, and the equalized current value is a current value that needs to be provided by the second power conversion module to the load or the power grid in the equalized current equalization mode. Optionally, when the state of charge offset value is less than or equal to the preset state of charge threshold, the system control parameter may include the state of charge offset value and the current instruction value of the second power conversion module. When the state of charge offset value is less than or equal to the preset state of charge threshold, and the current instruction value of the second power conversion module is greater than a current limiting value of the second power conversion module, the battery control system may determine that the system control parameter reaches the parameter threshold, and control each first power conversion module to switch the operating mode of the first power conversion module to a target-power current equalization mode. Further, the batter control system may receive a power current value delivered by the system controller based on expected power, and the power current value is a current value that needs to be provided by the second power conversion module to the load or the power grid in the equalized current equalization mode.

In some feasible implementations, when the energy storage system takes meeting of a power requirement of the load or the power grid as a primary objective, the system control parameter may be the current instruction value of the second power conversion module. The battery control system may determine a current limiting value of the second power conversion module based on the battery parameter of each battery pack. The battery parameter herein may include temperature, a maximum operating current, a state of charge value, and a state of health value. Further, when the current instruction value of the second power conversion module is greater than a current limiting value of the second power conversion module, the battery control system may determine that the system control parameter reaches the parameter threshold, control each first power conversion module to switch the operating mode of the first power conversion module to a target-power current equalization mode, and receive a power current value delivered by the system controller based on expected power. Optionally, when the current instruction value of the second power conversion module is less than or equal to the current limiting value of the second power conversion module, the system control parameter may include the state of charge offset value and the current instruction value of the second power conversion module. When the current instruction value of the second power conversion module is less than or equal to the current limiting value of the second power conversion module, and the state of charge offset value is greater than a preset state of charge threshold, the battery control system may determine that the system control parameter reaches the parameter threshold, control each first power conversion module to switch the operating mode of the first power conversion module to an equalized current equalization mode, and receive an equalized current value from the system controller.

Step S102: Based on the target current value and the battery parameter of each battery pack, the battery control system controls the battery pack to discharge to the bus through the first power conversion module connected in parallel to the battery pack, or controls the first power conversion module connected in parallel to the battery pack to charge the battery pack, to equalize the battery parameters of the battery packs or enable the battery cluster to output target power.

In some feasible implementations, when the target mode is the target-power current equalization mode, the battery parameter includes a maximum operating current. The battery control system may control any first power conversion module connected in parallel to any battery pack to obtain a current in a maximum operating current of the battery pack except a power current and output the current to the bus, or control any first power conversion module to obtain a current from the bus based on the power current value and output the current to the second power conversion module in parallel with the battery pack, to enable the battery cluster to output the target power to the second power conversion module. A current value of the power current is equal to the power current value, and the target power is less than or equal to the expected power. For ease of description, that the battery cluster (for example, the battery cluster 10) includes a battery pack 10a and a battery pack 10b is used as an example below for description. When a maximum operating current of the battery pack 10a is greater than a maximum operating current of the battery pack 10b, a battery control system 50 may control the battery pack 10a to output a power current to the second power conversion module 40, and control the battery pack 10a to output, to the first power conversion module 20a, a current in the maximum operating current of the battery pack 10a except the power current. In this case, the battery control system 50 may control the first power conversion module 20a to obtain the current in the maximum operating current of the battery pack 10a except the power current, and output the current to the bus 30. Further, the battery control system 50 may control the first power conversion module 20b to obtain a current from the bus 30 based on the power current value and output the current to the second power conversion module 40 in parallel with the battery pack 10b, to enable the battery cluster 10 to output the target power to the second power conversion module 40. Herein, a current output by the battery pack 10b and the first power conversion module 20b connected in parallel may be less than or equal to the power current. When the current output by the battery pack 10b and the first power conversion module 20b connected in parallel is less than the power current, the target power is less than the expected power. When the current output by the battery pack 10b and the first power conversion module 20b connected in parallel is equal to the power current, the target power is equal to the expected power. This may be specifically determined based on an actual application scenario, and is not limited herein. When the target power is equal to the expected power, it may indicate that the battery cluster 10 outputs maximum power to the second power conversion module 40.

In some feasible implementations, when the target mode is the equalized current equalization mode, the battery parameter includes the state of charge value and the maximum operating current. When the state of charge value of the battery pack is greater than an average state of charge value, the battery control system may control the battery pack to discharge to the bus through the first power conversion module connected in parallel to the battery pack, or when the state of charge value of the battery pack is less than the average state of charge value, the battery control system may control the first power conversion module connected in parallel to the battery pack to charge the battery pack. Further, the battery control system may control any first power conversion module connected in parallel to any battery pack to obtain a current in a maximum operating current of the battery pack except an equalized current and output the current to the bus, or control any first power conversion module to obtain a current from the bus to output an equalized current to the second power conversion module and charge the battery pack, to equalize the battery parameters of the battery packs. A current value of the equalized current is equal to the equalized current value, and the battery parameter of each battery pack may include a state of charge value, a state of health value, or another parameter. For ease of description, that the battery cluster (for example, the battery cluster 10) includes a battery pack 10a and a battery pack 10b is used as an example below for description. When a maximum operating current of the battery pack 10a is greater than a maximum operating current of the battery pack 10b, the battery control system 50 may control the battery pack 10a to output an equalized current to the second power conversion module 40, and control the battery pack 10a to output, to the first power conversion module 20a, a current in the maximum operating current of the battery pack 10a except the equalized current. In this case, the battery control system 50 may control the first power conversion module 20a to obtain the current in the maximum operating current of the battery pack 10a except the equalized current, and output the current to the bus 30. Further, the battery control system 50 may control the first power conversion module 20b to obtain a current from the bus 30 to output an equalized current to the second power conversion module 40 and charge the battery pack 10b, to equalize battery parameters of the battery pack 10a and the battery pack 10b in the battery cluster 10.

In specific implementation, for more operations performed by the battery control system in the battery management method provided in this application, refer to implementations performed by the battery control system in the energy storage systems shown in FIG. 2 to FIG. 4 and working principles of the energy storage systems. Details are not described herein again.

In this application, whether to switch the operating mode of each first power conversion module to the target mode may be determined by using the system control parameter, so that the battery parameters of the battery packs are equalized or the battery cluster is enabled to output the target power. Therefore, diversity of the operating mode of the first power conversion module can be implemented, accuracy of operating mode switching and system stability are improved, and applicability is better.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An energy storage system (1), wherein the energy storage system (1) comprises a battery cluster (10), a battery control system (50), at least two first power conversion modules (20a:20n), a bus (30), and a second power conversion module (40), the battery cluster (10) comprises a plurality of battery packs (10a:10n) connected in series, the plurality of battery packs (10a:10n) are connected in parallel to the bus (30) through the at least two first power conversion modules (20a:20n), one end of the second power conversion module (40) is connected in parallel to the battery cluster (10), and the other end of the second power conversion module (40) is connected to a load or a power grid;
the battery control system (50) is configured to obtain (S101) a target current value that needs to be provided by the second power conversion module (40) to the load or the power grid;
the battery control system (50) is configured to: based on the target current value and a battery parameter of each battery pack (10a:10n), wherein the battery parameter comprises a state of charge value, control the battery pack (10a:10n) to discharge to the bus (30) through the first power conversion module (20a:20n) connected in parallel to the battery pack (10a:10n), or control the first power conversion module (20a:20n), connected in parallel to the battery pack (10a:10n) to charge the battery pack (10a:10n), to equalize the battery parameters of the battery packs (10a:10n) or enable the battery cluster (10) to output target power,
the battery control system (50) is configured to: receive a current instruction value of the second power conversion module (40) that is delivered by a system controller, detect the battery parameter of each battery pack (10a:10n), and determine a system control parameter based on the battery parameter of each battery pack (10a:10n) and/or the current instruction value of the second power conversion module (40); the battery control system (50) is configured to: determine a state of charge offset value based on a maximum state of charge value and a minimum state of charge value in state of charge values of the battery packs (10a:10n), and determine the state of charge offset value and/or the current instruction value of the second power conversion module (40) as the system control parameter; and
the battery control system (50) is configured to: when the system control parameter reaches a parameter threshold, control each first power conversion module (20a:20n) to switch an operating mode of the first power conversion module (20a:20n), to a target mode, and obtain a target current value that needs to be provided by the second power conversion module (40) to the load or the power grid in the target mode, the energy storage system (1) **characterised in that**:
the system control parameter comprises the state of charge offset value and the current instruction value of the second power conversion module (40); and
the battery control system (50) is configured to: when the state of charge offset value is less than or equal to a preset state of charge threshold, and the current instruction value of the second power conversion module (40) is greater than a current limiting value of the second power conversion module (40), determine that the system control parameter reaches the parameter threshold, and control each first power conversion module (20a:20n) to switch the operating mode of the first power conversion module (20a:20n) to a target-power current equalization mode; or
the system control parameter is the current instruction value of the second power conversion module (40); and
the battery control system (50) is configured to: when the current instruction value of the second power conversion module (40) is greater than a current limiting value of the second power conversion module (40), determine that the system control parameter reaches the parameter threshold, and control each first power conversion module (20a:20n) to switch the operating mode of the first power conversion module (20a:20n) to a target-power current equalization mode; or
the system control parameter comprises the state of charge offset value and the current instruction value of the second power conversion module (40); and
the battery control system (50) is configured to: when the current instruction value of the second power conversion module (40) is less than or equal to a current limiting value of the second power conversion module (40), and the state of charge offset value is greater than a preset state of charge threshold, determine that the system control parameter reaches the parameter threshold, and control each first power conversion module (20a:20n) to switch the operating mode of the first power conversion module (20a:20n) to an equalized current equalization mode.

2. The energy storage system (1) according to claim 1, wherein the battery control system (50) is further configured to determine the current limiting value of the second power conversion module (40) based on the battery parameter of each battery pack (10a:10n), wherein the battery parameter comprises temperature, a maximum operating current, a state of charge value, and a state of health value.

3. The energy storage system (1) according to claim 1 or 2, wherein one battery pack (10a:10n) is connected in parallel to the bus (30) through one first power conversion module (20a:20n), the target mode is the target-power current equalization mode, and the battery parameter comprises the maximum operating current;
the battery control system (50) is configured to: receive a power current value delivered by the system controller based on expected power, and deliver the power current value to the first power conversion module (20a:20n) connected in parallel to each battery pack (10a:10n), wherein the power current value is a current value that needs to be provided by the second power conversion module (40) to the load or the power grid in the target-power current equalization mode; and
any first power conversion module (20a:20n) connected in parallel to any one of the battery packs (10a:10n) is configured to obtain a current in a maximum operating current of the battery pack (10a:10n) except a power current and output the current to the bus (30), or configured to obtain a current from the bus (30) based on the power current value and output the current to the second power conversion module (40) in parallel with the battery pack (10a:10n), to enable the battery cluster (10) to output the target power to the second power conversion module (40), wherein
a current value of the power current is equal to the power current value, and the target power is less than or equal to the expected power.

4. The energy storage system (1) according to claim 1 or 2, wherein one battery pack (10a:10n) is connected in parallel to the bus (30) through one first power conversion module (20a:20n), the target mode is the equalized current equalization mode, and the battery parameter comprises the state of charge value; and
the battery control system (50) is configured to: when the state of charge value of the battery pack (10a:10n) is greater than an average state of charge value, control the battery pack (10a:10n) to discharge to the bus (30) through the first power conversion module (20a:20n) connected in parallel to the battery pack (10a:10n), or configured to: when the state of charge value of the battery pack (10a:10n) is less than the average state of charge value, control the first power conversion module (20a:20n) connected in parallel to the battery pack (10a:10n) to charge the battery pack (10a:10n), wherein
the average state of charge value is an average value of state of charge values of the battery packs (10a:10n).

5. The energy storage system (1) according to claim 4, wherein the battery parameter further comprises the maximum operating current;
the battery control system (50) is configured to: receive an equalized current value from the system controller, and deliver the equalized current value to the first power conversion module (20a:20n) connected in parallel to each battery pack (10a:10n), wherein the equalized current value is a current value that needs to be provided by the second power conversion module (40) to the load or the power grid in the equalized current equalization mode; and
any first power conversion module (20a:20n) connected in parallel to any one of the battery packs (10a:10n) is configured to obtain a current in a maximum operating current of the battery pack (10a:10n) except an equalized current and output the current to the bus (30), or configured to obtain a current from the bus (30) to output an equalized current to the second power conversion module (40) and charge the battery pack (10a:10n), to equalize the battery parameters of the battery packs (10a:10n), wherein
a current value of the equalized current is equal to the equalized current value.

6. The energy storage system (1) according to any one of claims 1 to 5, wherein the plurality of battery packs (10a:10n) are connected to a same first power conversion module (20a:20n) through a selection switch; and
the selection switch is configured to select a target battery pack (10a:10n) from the plurality of battery packs (10a:10n), so that the target battery pack (10a:10n) is connected in parallel to the bus through the same first power conversion module (20a:20n), wherein the target battery pack (10a:10n) is a battery pack (10a:10n) with a maximum battery parameter or a battery pack (10a:10n) with a minimum battery parameter in the plurality of battery packs (10a:10n), and the battery parameter comprises the state of charge value or the maximum operating current.

7. A battery management method, wherein the method is applicable to an energy storage system (1), the energy storage system (1) comprises a battery cluster (10), a battery control system (10), at least two first power conversion modules (20a:20n), a bus (30), and a second power conversion module (40), the battery cluster (10) comprises a plurality of battery packs (10a:10n) connected in series, the plurality of battery packs (10a:10n) are connected in parallel to the bus (30) through the at least two first power conversion modules (20a:20n), one end of the second power conversion module (40) is connected in parallel to the battery cluster (40), and the other end of the second power conversion module (40) is connected to a load or a power grid; wherein the method comprises:
obtaining (S101), by the battery control system (40), a target current value that needs to be provided by the second power conversion module (40) to the load or the power grid; and
based on the target current value and a battery parameter of each battery pack (10a:10n), wherein the battery parameter comprises a state of charge value, controlling (S102), by the battery control system (50), the battery pack (10a:10n) to discharge to the bus (30) through the first power conversion module (20a:20n) connected in parallel to the battery pack (10a:10n), or controlling the first power conversion module (20a:20n) connected in parallel to the battery pack (10a:10n) to charge the battery pack (10a:10n), to equalize the battery parameters of the battery packs (10a:10n) or enable the battery cluster (10) to output target power, wherein the obtaining (S101), by the battery control system (50), a target current value that needs to be provided by the second power conversion module (40) to the load or the power grid comprises:
receiving, by the battery control system (50), a current instruction value of the second power conversion module (40) that is delivered by a system controller, detecting the battery parameter of each battery pack (10a:10n), and determining a system control parameter based on the battery parameter of each battery pack (10a:10n) and/or the current instruction value of the second power conversion module (40);
determining, by the battery control system (50), a state of charge offset value based on a maximum state of charge value and a minimum state of charge value in state of charge values of the battery packs (10a:10n), and determining the state of charge offset value and/or the current instruction value of the second power conversion module (40) as the system control parameter; and
when the system control parameter reaches a parameter threshold, controlling (S102), by the battery control system (50), each first power conversion module (20a:20n) to switch an operating mode of the first power conversion module (20a:20n) to a target mode, and obtaining a target current value that needs to be provided by the second power conversion module (40) to the load or the power grid in the target mode,
the method **characterized by**:
the system control parameter comprises the state of charge offset value and the current instruction value of the second power conversion module (40); and
when the state of charge offset value is less than or equal to a preset state of charge threshold, and the current instruction value of the second power conversion module (40) is greater than a current limiting value of the second power conversion module (40), determining, by the battery control system (50), that the system control parameter reaches the parameter threshold, and controlling each first power conversion module (20a:20n) to switch the operating mode of the first power conversion module (20a:20n) to a target-power current equalization mode; or
the system control parameter is the current instruction value of the second power conversion module (40); and
when the current instruction value of the second power conversion module (40) is greater than a current limiting value of the second power conversion module (40), determining, the battery control system (50), that the system control parameter reaches the parameter threshold, and controlling each first power conversion module (20a:20n) to switch the operating mode of the first power conversion module (20a:20n) to a target-power current equalization mode; or
the system control parameter comprises the state of charge offset value and the current instruction value of the second power conversion module (40); and
when the current instruction value of the second power conversion module (40) is less than or equal to a current limiting value of the second power conversion module (40), and the state of charge offset value is greater than a preset state of charge threshold, determining, by the battery control system (50), that the system control parameter reaches the parameter threshold, and controlling each first power conversion module (20a:20n) to switch the operating mode of the first power conversion module (20a:20n) to an equalized current equalization mode.

## Patentansprüche

1. Energiespeichersystem (1), wobei das Energiespeichersystem (1) einen Batteriecluster (10), ein Batteriesteuersystem (50), mindestens zwei erste Leistungsumwandlungsmodule (20a:20n), einen Bus (30) und ein zweites Leistungsumwandlungsmodul (40) umfasst, der Batteriecluster (10) eine Vielzahl von in Reihenschaltung verbundenen Batteriepacks (10a:10n) umfasst, die Vielzahl von Batteriepacks (10a:10n) über die mindestens zwei ersten Leistungsumwandlungsmodule (20a:20n) in Parallelschaltung mit dem Bus (30) verbunden ist, ein Ende des zweiten Leistungsumwandlungsmoduls (40) in Parallelschaltung mit dem Batteriecluster (10) verbunden ist und das andere Ende des zweiten Leistungsumwandlungsmoduls (40) mit einer Last oder einem Stromnetz verbunden ist;
das Batteriesteuersystem (50) dazu konfiguriert ist, einen Zielstromwert zu erlangen (S101), der von dem zweiten Leistungsumwandlungsmodul (40) an die Last oder das Stromnetz bereitzustellen ist;
das Batteriesteuersystem (50) zu Folgendem konfiguriert ist:
basierend auf dem Zielstromwert und einem Batterieparameter jedes Batteriepacks (10a:10n), wobei der Batterieparameter einen Ladezustandswert umfasst, Steuern des Batteriepacks (10a:10n), um über das erste Leistungsumwandlungsmodul (20a:20n), das in Parallelschaltung mit dem Batteriepack (10a:10n) verbunden ist, an den Bus (30) zu entladen, oder Steuern des ersten Leistungsumwandlungsmoduls (20a:20n), das in Parallelschaltung mit dem Batteriepack (10a:10n) verbunden ist, um das Batteriepack (10a:10n) zu laden, um die Batterieparameter der Batteriepacks (10a:10n) auszugleichen oder den Batteriecluster (10) in die Lage zu versetzen, eine Zielleistung auszugeben,
das Batteriesteuersystem (50) zu Folgendem konfiguriert ist:
Empfangen eines Stromanweisungswerts des zweiten Leistungsumwandlungsmoduls (40), der von einer Systemsteuerung geliefert wird, Erkennen des Batterieparameters jedes Batteriepacks (10a:10n) und Bestimmen eines Systemsteuerparameters basierend auf dem Batterieparameter jedes Batteriepacks (10a:10n) und/oder dem Stromanweisungswert des zweiten Leistungsumwandlungsmoduls (40); das Batteriesteuersystem (50) zu Folgendem konfiguriert ist:
Bestimmen eines Ladezustands-Offsetwerts basierend auf einem maximalen Ladezustandswert und einem minimalen Ladezustandswert in Ladezustandswerten der Batteriepacks (10a: 10n) und Bestimmen des Ladezustands-Offsetwerts und/oder des Stromanweisungswerts des zweiten Leistungsumwandlungsmoduls (40) als den Systemsteuerparameter; und
das Batteriesteuersystem (50) zu Folgendem konfiguriert ist:
wenn der Systemsteuerparameter einen Parameterschwellenwert erreicht, Steuern jedes ersten Leistungsumwandlungsmoduls (20a:20n), um einen Betriebsmodus des ersten Leistungsumwandlungsmoduls (20a:20n) in einen Zielmodus umzuschalten, und Erlangen eines Zielstromwerts, der von dem zweiten Leistungsumwandlungsmodul (40) an die Last oder das Stromnetz in dem Zielmodus bereitzustellen ist, wobei das Energiespeichersystem (1) durch Folgendes gekennzeichnet ist:
der Systemsteuerparameter umfasst den Ladezustands-Offsetwert und den Stromanweisungswert des zweiten Leistungsumwandlungsmoduls (40); und
das Batteriesteuersystem (50) ist zu Folgendem konfiguriert:
wenn der Ladezustands-Offsetwert kleiner oder gleich einem voreingestellten Ladezustandsschwellenwert ist und der Stromanweisungswert des zweiten Leistungsumwandlungsmoduls (40) größer als ein Strombegrenzungswert des zweiten Leistungsumwandlungsmoduls (40) ist, Bestimmen, dass der Systemsteuerparameter den Parameterschwellenwert erreicht, und Steuern jedes ersten Leistungsumwandlungsmoduls (20a:20n), um den Betriebsmodus des ersten Leistungsumwandlungsmoduls (20a:20n) in einen Zielleistungsstromausgleichsmodus umzuschalten; oder
der Systemsteuerparameter ist der Stromanweisungswert des zweiten Leistungsumwandlungsmoduls (40); und
das Batteriesteuersystem (50) ist zu Folgendem konfiguriert:
wenn der Stromanweisungswert des zweiten Leistungsumwandlungsmoduls (40) größer als ein Strombegrenzungswert des zweiten Leistungsumwandlungsmoduls (40) ist, Bestimmen, dass der Systemsteuerparameter den Parameterschwellenwert erreicht, und Steuern jedes ersten Leistungsumwandlungsmoduls (20a:20n), um den Betriebsmodus des ersten Leistungsumwandlungsmoduls (20a:20n) in einen Zielleistungsstromausgleichsmodus umzuschalten; oder
der Systemsteuerparameter umfasst den Ladezustands-Offsetwert und den Stromanweisungswert des zweiten Leistungsumwandlungsmoduls (40); und
das Batteriesteuersystem (50) ist zu Folgendem konfiguriert:
wenn der Stromanweisungswert des zweiten Leistungsumwandlungsmoduls (40) kleiner oder gleich einem Strombegrenzungswert des zweiten Leistungsumwandlungsmoduls (40) ist und der Ladezustands-Offsetwert größer als ein voreingestellter Ladezustands-Schwellenwert ist, Bestimmen, dass der Systemsteuerparameter den Parameterschwellenwert erreicht, und Steuern jedes ersten Leistungsumwandlungsmoduls (20a:20n), um den Betriebsmodus des ersten Leistungsumwandlungsmoduls (20a:20n) in einen ausgeglichenen Stromausgleichsmodus umzuschalten.

2. Energiespeichersystem (1) nach Anspruch 1, wobei das Batteriesteuersystem (50) ferner dazu konfiguriert ist, den Strombegrenzungswert des zweiten Leistungsumwandlungsmoduls (40) basierend auf dem Batterieparameter jedes Batteriepacks (10a: 10n) zu bestimmen, wobei der Batterieparameter Temperatur, einen maximalen Betriebsstrom, einen Ladezustandswert und einen Gesundheitszustandswert umfasst.

3. Energiespeichersystem (1) nach Anspruch 1 oder 2, wobei ein Batteriepack (10a:10n) über ein erstes Leistungsumwandlungsmodul (20a:20n) in Parallelschaltung mit dem Bus (30) verbunden ist, der Zielmodus der Zielleistungsstromausgleichsmodus ist und der Batterieparameter den maximalen Betriebsstrom umfasst;
das Batteriesteuersystem (50) zu Folgendem konfiguriert ist:
Empfangen eines Starkstromwerts, der von der Systemsteuerung basierend auf einer erwarteten Leistung geliefert wird, und Liefern des Starkstromwerts an das erste Leistungsumwandlungsmodul (20a:20n), das in Parallelschaltung mit jedem Batteriepack (10a:10n) verbunden ist, wobei der Starkstromwert ein Stromwert ist, der von dem zweiten Leistungsumwandlungsmodul (40) an die Last oder das Stromnetz in dem Zielleistungsstromausgleichsmodus bereitzustellen ist; und
ein beliebiges erstes Leistungsumwandlungsmodul (20a:20n), das in Parallelschaltung mit einem beliebigen der Batteriepacks (10a:10n) verbunden ist, dazu konfiguriert ist, einen Strom in einem maximalen Betriebsstrom des Batteriepacks (10a:10n) mit Ausnahme eines Starkstroms zu erlangen und den Strom an den Bus (30) auszugeben, oder dazu konfiguriert ist, einen Strom von dem Bus (30) basierend auf dem Starkstromwert zu erlangen und den Strom an das zweite Leistungsumwandlungsmodul (40) in Parallelschaltung mit dem Batteriepack (10a:10n) auszugeben, um den Batteriecluster (10) in die Lage zu versetzen, die Zielleistung an das zweite Leistungsumwandlungsmodul (40) auszugeben, wobei
ein Stromwert des Starkstroms gleich dem Starkstromwert ist und die Zielleistung kleiner oder gleich der erwarteten Leistung ist.

4. Energiespeichersystem (1) nach Anspruch 1 oder 2, wobei ein Batteriepack (10a:10n) über ein erstes Leistungsumwandlungsmodul (20a:20n) in Parallelschaltung mit dem Bus (30) verbunden ist, der Zielmodus der ausgeglichene Stromausgleichsmodus ist und der Batterieparameter den Ladezustandswert umfasst; und
das Batteriesteuersystem (50) zu Folgendem konfiguriert ist:
wenn der Ladezustandswert des Batteriepacks (10a:10n) größer als ein durchschnittlicher Ladezustandswert ist, Steuern des Batteriepacks (10a:10n), um über das erste Leistungsumwandlungsmodul (20a:20n), das in Parallelschaltung mit dem Batteriepack (10a:10n) verbunden ist, an den Bus (30) zu entladen, oder zu Folgendem konfiguriert ist: wenn der Ladezustandswert des Batteriepacks (10a:10n) kleiner als der durchschnittliche Ladezustandswert ist, Steuern des ersten Leistungsumwandlungsmoduls (20a:20n), das in Parallelschaltung mit dem Batteriepack (10a:10n) verbunden ist, um das Batteriepack (10a:10n) aufzuladen, wobei
der durchschnittliche Ladezustandswert ein Durchschnittswert von Ladezustandswerten der Batteriepacks (10a:10n) ist.

5. Energiespeichersystem (1) nach Anspruch 4, wobei der Batterieparameter ferner den maximalen Betriebsstrom umfasst; das Batteriesteuersystem (50) zu Folgendem konfiguriert ist:
Empfangen eines ausgeglichenen Stromwerts von der Systemsteuerung und Liefern des ausgeglichenen Stromwerts an das erste Leistungsumwandlungsmodul (20a:20n), das in Parallelschaltung mit jedem Batteriepack (10a:10n) verbunden ist, wobei der ausgeglichene Stromwert ein Stromwert ist, der von dem zweiten Leistungsumwandlungsmodul (40) an die Last oder das Stromnetz in dem ausgeglichenen Stromausgleichsmodus bereitzustellen ist; und
ein beliebiges erstes Leistungsumwandlungsmodul (20a:20n), das in Parallelschaltung mit einem beliebigen der Batteriepacks (10a:10n) verbunden ist, dazu konfiguriert ist, einen Strom in einem maximalen Betriebsstrom des Batteriepacks (10a:10n) mit Ausnahme eines ausgeglichenen Stroms zu erlangen und den Strom an den Bus (30) auszugeben, oder dazu konfiguriert ist, einen Strom von dem Bus (30) zu erlangen, um einen ausgeglichenen Strom an das zweite Leistungsumwandlungsmodul (40) auszugeben und das Batteriepack (10a:10n) aufzuladen, um die Batterieparameter der Batteriepacks (10a:10n) auszugleichen, wobei
ein Stromwert des ausgeglichenen Stroms gleich dem ausgeglichenen Stromwert ist.

6. Energiespeichersystem (1) nach einem der Ansprüche 1 bis 5, wobei die Vielzahl von Batteriepacks (10a:10n) über einen Auswahlschalter mit einem gleichen ersten Leistungsumwandlungsmodul (20a:20n) verbunden ist; und
der Auswahlschalter dazu konfiguriert ist, ein Zielbatteriepack (10a:10n) aus der Vielzahl von Batteriepacks (10a:10n) auszuwählen, so dass das Zielbatteriepack (10a:10n) über dasselbe erste Leistungsumwandlungsmodul (20a:20n) in Parallelschaltung mit dem Bus verbunden ist, wobei das Zielbatteriepack (10a:10n) ein Batteriepack (10a:10n) mit einem maximalen Batterieparameter oder ein Batteriepack (10a:10n) mit einem minimalen Batterieparameter in der Vielzahl von Batteriepacks (10a:10n) ist und der Batterieparameter den Ladezustandswert oder den maximalen Betriebsstrom umfasst.

7. Batterieverwaltungsverfahren, wobei das Verfahren auf ein Energiespeichersystem (1) anwendbar ist, wobei das Energiespeichersystem (1) einen Batteriecluster (10), ein Batteriesteuersystem (10), mindestens zwei erste Leistungsumwandlungsmodule (20a:20n), einen Bus (30) und ein zweites Leistungsumwandlungsmodul (40) umfasst, der Batteriecluster (10) eine Vielzahl von in Reihenschaltung verbundenen Batteriepacks (10a:10n) umfasst, die Vielzahl von Batteriepacks (10a:10n) über die mindestens zwei ersten Leistungsumwandlungsmodule (20a:20n) in Parallelschaltung mit dem Bus (30) verbunden ist, ein Ende des zweiten Leistungsumwandlungsmoduls (40) in Parallelschaltung mit dem Batteriecluster (40) verbunden ist und das andere Ende des zweiten Leistungsumwandlungsmoduls (40) mit einer Last oder einem Stromnetz verbunden ist; wobei das Verfahren Folgendes umfasst:
Erlangen (S101), durch das Batteriesteuersystem (40) eines Zielstromwerts, der von dem zweiten Leistungsumwandlungsmodul (40) an die Last oder das Stromnetz bereitzustellen ist; und
basierend auf dem Zielstromwert und einem Batterieparameter jedes Batteriepacks (10a:10n), wobei der Batterieparameter einen Ladezustandswert umfasst, Steuern (S102), durch das Batteriesteuersystem (50), des Batteriepacks (10a:10n), um über das erste Leistungsumwandlungsmodul (20a:20n), das in Parallelschaltung mit dem Batteriepack (10a:10n) verbunden ist, an den Bus (30) zu entladen, oder Steuern des ersten Leistungsumwandlungsmoduls (20a:20n), das in Parallelschaltung mit dem Batteriepack (10a:10n) verbunden ist, um das Batteriepack (10a:10n) aufzuladen, um die Batterieparameter der Batteriepacks (10a:10n) auszugleichen oder um den Batteriecluster (10) in die Lage zu versetzen, eine Zielleistung auszugeben, wobei das Erlangen (S101), durch das Batteriesteuersystem (50), eines Zielstromwerts, der von dem zweiten Leistungsumwandlungsmodul (40) an die Last oder das Stromnetz bereitzustellen ist, Folgendes umfasst:
Empfangen, durch das Batteriesteuersystem (50), eines Stromanweisungswerts des zweiten Leistungsumwandlungsmoduls (40), der von einer Systemsteuerung geliefert wird, Erkennen des Batterieparameters jedes Batteriepacks (10a:10n) und Bestimmen eines Systemsteuerparameters basierend auf dem Batterieparameter jedes Batteriepacks (10a:10n) und/oder dem Stromanweisungswert des zweiten Leistungsumwandlungsmoduls (40) ;
Bestimmen, durch das Batteriesteuersystem (50), eines Ladezustands-Offsetwerts basierend auf einem maximalen Ladezustandswert und einem minimalen Ladezustandswert in Ladezustandswerten der Batteriepacks (10a:10n), und Bestimmen des Ladezustands-Offsetwerts und/oder des Stromanweisungswerts des zweiten Leistungsumwandlungsmoduls (40) als den Systemsteuerparameter; und
wenn der Systemsteuerparameter einen Parameterschwellenwert erreicht, Steuern (S102), durch das Batteriesteuersystem (50), jedes ersten Leistungsumwandlungsmoduls (20a:20n), um einen Betriebsmodus des ersten Leistungsumwandlungsmoduls (20a:20n) in einen Zielmodus umzuschalten, und Erlangen eines Zielstromwerts, der von dem zweiten Leistungsumwandlungsmodul (40) an die Last oder das Stromnetz in dem Zielmodus bereitzustellen ist,
wobei das Verfahren durch Folgendes gekennzeichnet ist:
der Systemsteuerparameter umfasst den Ladezustands-Offsetwert und den Stromanweisungswert des zweiten Leistungsumwandlungsmoduls (40); und
wenn der Ladezustands-Offsetwert kleiner oder gleich einem voreingestellten Ladezustandsschwellenwert ist und der Stromanweisungswert des zweiten Leistungsumwandlungsmoduls (40) größer als ein Strombegrenzungswert des zweiten Leistungsumwandlungsmoduls (40) ist, Bestimmen, durch das Batteriesteuersystem (50), dass der Systemsteuerparameter den Parameterschwellenwert erreicht, und Steuern jedes ersten Leistungsumwandlungsmoduls (20a:20n), um den Betriebsmodus des ersten Leistungsumwandlungsmoduls (20a:20n) in einen Zielleistungsstromausgleichsmodus umzuschalten; oder
der Systemsteuerparameter ist der Stromanweisungswert des zweiten Leistungsumwandlungsmoduls (40); und
wenn der Stromanweisungswert des zweiten Leistungsumwandlungsmoduls (40) größer als ein Strombegrenzungswert des zweiten Leistungsumwandlungsmoduls (40) ist, Bestimmen, durch das Batteriesteuersystem (50), dass der Systemsteuerparameter den Parameterschwellenwert erreicht, und Steuern jedes ersten Leistungsumwandlungsmoduls (20a:20n), um den Betriebsmodus des ersten Leistungsumwandlungsmoduls (20a:20n) in einen Zielleistungsstromausgleichsmodus umzuschalten; oder
der Systemsteuerparameter umfasst den Ladezustands-Offsetwert und den Stromanweisungswert des zweiten Leistungsumwandlungsmoduls (40); und
wenn der Stromanweisungswert des zweiten Leistungsumwandlungsmoduls (40) kleiner oder gleich einem Strombegrenzungswert des zweiten Leistungsumwandlungsmoduls (40) ist und der Ladezustands-Offsetwert größer als ein voreingestellter Ladezustands-Schwellenwert ist, Bestimmen, durch das Batteriesteuersystem (50), dass der Systemsteuerparameter den Parameterschwellenwert erreicht, und Steuern jedes ersten Leistungsumwandlungsmoduls (20a:20n), um den Betriebsmodus des ersten Leistungsumwandlungsmoduls (20a:20n) in einen ausgeglichenen Stromausgleichsmodus umzuschalten.

## Revendications

1. Système de stockage d'énergie (1), dans lequel le système de stockage d'énergie (1) comprend un groupe de batteries (10), un système de commande de batterie (50), au moins deux premiers modules de conversion de puissance (20a:20n), un bus (30), et un second module de conversion de puissance (40), le groupe de batteries (10) comprend une pluralité de blocs-batteries (10a:10n) reliées en série, la pluralité de blocs-batteries (10a:10n) sont reliées en parallèle au bus (30) par l'intermédiaire des au moins deux premiers modules de conversion de puissance (20a:20n), une extrémité du second module de conversion de puissance (40) est reliée en parallèle au groupe de batteries (10), et l'autre extrémité du second module de conversion de puissance (40) est reliée à une charge ou à un réseau électrique ;
le système de commande de batterie (50) est configuré pour obtenir (S101) une valeur de courant cible qui doit être fournie par le second module de conversion de puissance (40) à la charge ou au réseau électrique ;
le système de commande de batterie (50) est configuré pour : sur la base de la valeur de courant cible et d'un paramètre de batterie de chaque bloc-batterie (10a:10n), dans lequel le paramètre de batterie comprend une valeur d'état de charge, commander au bloc-batterie (10a:10n) de se décharger sur le bus (30) par l'intermédiaire du premier module de conversion de puissance (20a:20n) relié en parallèle au bloc-batterie (10a:10n), ou commander le premier module de conversion de puissance (20a:20n), relié en parallèle au bloc-batterie (10a:10n) pour charger le bloc-batterie (10a:10n), pour égaliser les paramètres de batterie des blocs-batteries (10a:10n) ou permettre au groupe de batteries (10) de produire une puissance cible,
le système de commande de batterie (50) est configuré pour :
recevoir une valeur d'instruction de courant du second module de conversion de puissance (40) qui est délivrée par un dispositif de commande de système, détecter le paramètre de batterie de chaque bloc de batterie (10a:10n), et déterminer un paramètre de commande de système basé sur le paramètre de batterie de chaque bloc-batterie (10a:10n) et/ou la valeur d'instruction de courant du second module de conversion de puissance (40) ; le système de commande de batterie (50) est configuré pour : déterminer une valeur de décalage d'état de charge sur la base d'une valeur d'état de charge maximale et d'une valeur d'état de charge minimale dans des valeurs d'état de charge des blocs-batteries (10a:10n), et déterminer la valeur de décalage d'état de charge et/ou la valeur d'instruction de courant du second module de conversion de puissance (40) en tant que paramètre de commande du système ; et
le système de commande de batterie (50) est configuré pour :
lorsque le paramètre de commande du système atteint un seuil de paramètre, commander chaque premier module de conversion de puissance (20a:20n) pour commuter un mode de fonctionnement du premier module de conversion de puissance (20a:20n), pour un mode cible, et obtenir une valeur de courant cible qui doit être fournie par le second module de conversion de puissance (40) à la charge ou au réseau électrique dans le mode cible, le système de stockage d'énergie (1) **caractérisé en ce que** :
le paramètre de commande du système comprend la valeur de décalage d'état de charge et la valeur d'instruction de courant du second module de conversion de puissance (40) ; et
le système de commande de batterie (50) est configuré pour :
lorsque la valeur de décalage d'état de charge est inférieure ou égale à un seuil d'état de charge prédéfini, et que la valeur d'instruction de courant du second module de conversion de puissance (40) est supérieure à une valeur limite de courant du second module de conversion de puissance (40), déterminer que le paramètre de commande du système atteint le seuil de paramètre, et commander chaque premier module de conversion de puissance (20a:20n) pour commuter le mode de fonctionnement du premier module de conversion de puissance (20a:20n) à un mode d'égalisation de courant de puissance cible ; ou
le paramètre de commande du système est la valeur d'instruction de courant du second module de conversion de puissance (40) ; et
le système de commande de batterie (50) est configuré pour :
lorsque la valeur d'instruction de courant du second module de conversion de puissance (40) est supérieure à une valeur de courant limite du second module de conversion de puissance (40), déterminer que le paramètre de commande du système atteint le seuil de paramètre, et commander chaque premier module de conversion de puissance (20a:20n) pour commuter le mode de fonctionnement du premier module de conversion de puissance (20a:20n) à un mode d'égalisation de courant de puissance cible ; ou
le paramètre de commande du système comprend la valeur de décalage d'état de charge et la valeur d'instruction de courant du second module de conversion de puissance (40) ; et
le système de commande de batterie (50) est configuré pour :
lorsque la valeur d'instruction de courant du second module de conversion de puissance (40) est inférieure ou égale à une valeur limite de courant du second module de conversion de puissance (40) et la valeur de décalage d'état de charge est supérieure à un seuil d'état de charge prédéfini, déterminer que le paramètre de commande du système atteint le seuil de paramètre, et commander à chaque premier module de conversion de puissance (20a:20n) de commuter le mode de fonctionnement du premier module de conversion de puissance (20a:20n) à un mode d'égalisation du courant égalisé.

2. Système de stockage d'énergie (1) selon la revendication 1, dans lequel le système de commande de batterie (50) est également configuré pour déterminer la valeur limite de courant du second module de conversion de puissance (40) sur la base du paramètre de batterie de chaque bloc de batterie (10a:10n), dans lequel le paramètre de batterie comprend la température, un courant de fonctionnement maximal, une valeur d'état de charge et une valeur d'état de santé.

3. Système de stockage d'énergie (1) selon la revendication 1 ou 2, dans lequel un bloc de batterie (10a:10n) est relié en parallèle au bus (30) par l'intermédiaire d'un premier module de conversion de puissance (20a:20n), le mode cible est le mode d'égalisation du courant de puissance cible, et le paramètre de batterie comprend le courant de fonctionnement maximal ;
le système de commande de batterie (50) est configuré pour :
recevoir une valeur de courant de puissance délivrée par le dispositif de commande de système sur la base de la puissance attendue, et fournir la valeur de courant de puissance au premier module de conversion de puissance (20a:20n) relié en parallèle à chaque bloc de batterie (10a:10n), dans lequel la valeur de courant électrique est une valeur de courant qui doit être fournie par le second module de conversion de puissance (40) à la charge ou au réseau électrique dans le mode d'égalisation de courant de puissance cible ; et
tout premier module de conversion de puissance (20a:20n) relié en parallèle à l'un quelconque des blocs-batteries (10a:10n) est configuré pour obtenir un courant dans un courant de fonctionnement maximal du bloc-batterie (10a:10n) à l'exception d'un courant de puissance et délivrer le courant au bus (30), ou configuré pour obtenir un courant du bus (30) sur la base de la valeur du courant de puissance et délivrer le courant au second module de conversion de puissance (40) en parallèle avec le bloc-batterie (10a:10n), pour permettre au groupe de batteries (10) de fournir la puissance cible au second module de conversion de puissance (40), dans lequel
une valeur de courant du courant de puissance est égale à la valeur du courant de puissance, et la puissance cible est inférieure ou égale à la puissance attendue.

4. Système de stockage d'énergie (1) selon la revendication 1 ou 2, dans lequel un bloc de batterie (10a:10n) est relié en parallèle au bus (30) par l'intermédiaire d'un premier module de conversion de puissance (20a:20n), le mode cible est le mode d'égalisation du courant de puissance cible, et le paramètre de batterie comprend la valeur d'état de charge ;
le système de commande de batterie (50) est configuré pour :
lorsque la valeur d'état de charge du bloc-batterie (10a:10n) est supérieure à une valeur d'état de charge moyenne, commander au bloc-batterie (10a:10n) de se décharger sur le bus (30) par l'intermédiaire du premier module de conversion de puissance (20a:20n) relié en parallèle au bloc-batterie (10a:10n), ou configuré pour : lorsque la valeur d'état de charge du bloc-batterie (10a:10n) est inférieure à la valeur d'état de charge moyenne, commander au premier module de conversion de puissance (20a:20n) relié en parallèle au bloc-batterie (10a:10n) de charger le bloc-batterie (10a:10n), dans lequel
la valeur d'état de charge moyenne est une valeur moyenne des valeurs d'état de charge des blocs-batteries (10a:10n).

5. Système de stockage d'énergie (1) selon la revendication 4, dans lequel le paramètre de batterie comprend également le courant de fonctionnement maximal ;
le système de commande de batterie (50) est configuré pour :
recevoir une valeur de courant égalisée délivrée par le dispositif de commande de système et fournir la valeur de courant égalisée au premier module de conversion de puissance (20a:20n) relié en parallèle à chaque bloc de batterie (10a:10n), dans lequel la valeur de courant égalisée est une valeur de courant qui doit être fournie par le second module de conversion de puissance (40) à la charge ou au réseau électrique dans le mode d'égalisation de courant égalisé ; et
tout premier module de conversion de puissance (20a:20n) relié en parallèle à l'un quelconque des blocs-batteries (10a:10n) est configuré pour obtenir un courant dans un courant de fonctionnement maximal du bloc-batterie (10a:10n) à l'exception d'un courant égalisé et délivrer le courant au bus (30), ou configuré pour obtenir un courant du bus (30) pour délivrer un courant égalisé au second module de conversion de puissance (40) et charger le bloc-batterie (10a:10n), pour égaliser les paramètres de batterie des blocs-batteries (10a:10n), dans lequel
une valeur de courant du courant égalisé est égale à la valeur du courant égalisé.

6. Système de stockage d'énergie (1) selon l'une quelconque des revendications 1 à 5, dans lequel la pluralité de blocs-batteries (10a:10n) sont reliés à un même premier module de conversion de puissance (20a:20n) par l'intermédiaire d'un commutateur de sélection ; et
le commutateur de sélection est configuré pour sélectionner un bloc-batterie cible (10a:10n) parmi la pluralité de blocs-batteries (10a:10n), de sorte que le bloc-batterie cible (10a:10n) est relié en parallèle au bus par l'intermédiaire du même premier module de conversion de puissance (20a:20n), dans lequel le bloc-batterie cible (10a:10n) est un bloc-batterie (10a:10n) avec un paramètre de batterie maximal ou un bloc-batterie (10a:10n) avec un paramètre de batterie minimum dans la pluralité de blocs-batteries (10a:10n), et le paramètre de batterie comprend la valeur d'état de charge ou le courant de fonctionnement maximal.

7. Procédé de gestion de batterie, dans lequel le procédé est applicable à un système de stockage d'énergie (1), le système de stockage d'énergie (1) comprend un groupe de batteries (10), un système de commande de batterie (10), au moins deux premiers modules de conversion de puissance (20a:20n), un bus ( 30), et un second module de conversion de puissance (40), le groupe de batteries (10) comprend une pluralité de blocs-batteries (10a:10n) reliés en série, la pluralité de blocs-batteries (10a:10n) sont reliées en parallèle au bus (30) par l'intermédiaire des au moins deux premiers modules de conversion de puissance (20a:20n), une extrémité du second module de conversion de puissance (40) est reliée en parallèle au groupe de batteries (40), et l'autre extrémité du second module de conversion de puissance (40) est reliée à une charge ou à un réseau électrique ; dans lequel le procédé comprend :
l'obtention (S101), par le système de commande de batterie (40), d'une valeur de courant cible qui doit être fournie par le second module de conversion de puissance (40) à la charge ou au réseau électrique ; et
sur la base de la valeur de courant cible et d'un paramètre de batterie de chaque bloc-batterie (10a:10n), dans lequel le paramètre de batterie comprend une valeur d'état de charge, le fait de commander (S102), par le système de commande de batterie (50), au bloc-batterie (10a:10n) de se décharger sur le bus (30) par l'intermédiaire du premier module de conversion de puissance (20a:20n) relié en parallèle au bloc-batterie (10a:10n), ou le fait de commander au premier module de conversion de puissance (20a:20n) relié en parallèle au bloc-batterie (10a:10n) de charger le bloc-batterie (10a:10n), pour égaliser les paramètres de batterie des blocs-batteries (10a:10n) ou permettre au groupe de batteries (10) de produire une puissance cible, dans lequel l'obtention (S101), par le système de commande de batterie (50), d'une valeur de courant cible qui doit être fournie par le second module de conversion de puissance (40) à la charge ou au réseau électrique comprend :
la réception, par le système de commande de batterie (50), d'une valeur d'instruction de courant du second module de conversion de puissance (40) qui est délivrée par un dispositif de commande de système, la détection du paramètre de batterie de chaque bloc de batterie (10a:10n), et la détermination d'un paramètre de commande système basé sur le paramètre de batterie de chaque bloc-batterie (10a:10n) et/ou la valeur d'instruction de courant du second module de conversion de puissance (40) ;
la détermination, par le système de commande de batterie (50), d'une valeur de décalage d'état de charge sur la base d'une valeur d'état de charge maximale et d'une valeur d'état de charge minimale dans des valeurs d'état de charge des blocs-batteries (10a:10n), et la détermination de la valeur de décalage d'état de charge et/ou la valeur d'instruction de courant du second module de conversion de puissance (40) en tant que paramètre de commande du système ; et
lorsque le paramètre de commande du système atteint un seuil de paramètre, la commande (S102), par le système de commande de batterie (50), de chaque premier module de conversion de puissance (20a:20n) pour commuter un mode de fonctionnement du premier module de conversion de puissance (20a:20n), pour un mode cible, et l'obtention d'une valeur de courant cible qui doit être fournie par le second module de conversion de puissance (40) à la charge ou au réseau électrique dans le mode cible,
le procédé étant **caractérisé par** :
le paramètre de commande du système comprend la valeur de décalage d'état de charge et la valeur d'instruction de courant du second module de conversion de puissance (40) ; et
lorsque la valeur de décalage d'état de charge est inférieure ou égale à un seuil d'état de charge prédéfini, et que la valeur d'instruction de courant du second module de conversion de puissance (40) est supérieure à une valeur limite de courant du second module de conversion de puissance (40), la détermination, par le système de commande de batterie (50), que le paramètre de commande du système atteint le seuil de paramètre, et le fait de commander à chaque premier module de conversion de puissance (20a:20n) de commuter le mode de fonctionnement du premier module de conversion de puissance (20a:20n) à un mode d'égalisation de courant de puissance cible ; ou
le paramètre de commande du système est la valeur d'instruction de courant du second module de conversion de puissance (40) ; et
lorsque la valeur d'instruction de courant du second module de conversion de puissance (40) est supérieure à une valeur de courant limite du second module de conversion de puissance (40), le fait de déterminer, par le système de commande de la batterie (50), que le paramètre de commande du système atteint le seuil de paramètre, et le fait de commander à chaque premier module de conversion de puissance (20a:20n) de commuter le mode de fonctionnement du premier module de conversion de puissance (20a:20n) à un mode d'égalisation de courant de puissance cible ; ou
le paramètre de commande du système comprend la valeur de décalage d'état de charge et la valeur d'instruction de courant du second module de conversion de puissance (40) ; et
lorsque la valeur d'instruction de courant du second module de conversion de puissance (40) est inférieure ou égale à une valeur limite de courant du second module de conversion de puissance (40), et la valeur de décalage d'état de charge est supérieure à un seuil d'état de charge prédéfini, le fait de déterminer, par le système de commande de la batterie (50), que le paramètre de commande du système atteint le seuil de paramètre, et le fait de commander à chaque premier module de conversion de puissance (20a:20n) de commuter le mode de fonctionnement du premier module de conversion de puissance (20a:20n) à un mode d'égalisation de courant égalisé.
